# EUROPEAN PATENT APPLICATION

(11) **EP 1 772 315 A1**
(43) Date of publication of application: **11.04.2007**
(21) Application number: 06119541.8
(22) Date of filing: 25.08.2006
(51) Int. Cl.: B60R 1/078

(54) **Mirror assembly for a towing vehicle**

(30) Priority: 26.08.2005 NL 1029817
(71) Applicant: Reich KG, 35713 Eschenburg-Wissenbach (DE); Reich Benelux Office, 6825 MS Arnhem (NL)
(72) Inventor: Bender, Steffen, 35713 Eschenburg (DE); Beijersbergen van Henegouwen, Cornelis Martin, 5314 AP Bruchem (NL); Staats, Kees Jan, 6721 XX Bennekom (NL); Boelaars, Gijsbertus Lukas Maria, 7021 HM Zelhem (NL)
(74) Representative: van Westenbrugge, Andries

(57) **Abstract**

Mirror assembly comprising a mirror support, such as a mirror housing and a mirror mounted thereon/therein. From the mirror support, an extension extends so that the mirror assembly is suitable for mounting on vehicles with which a trailer such as a caravan is towed. The extension is provided at the other end with mounting means for fastening to a mirror already present on the vehicle. Such mounting means comprise two hook-shaped members and a flexible part extending therebetween. For adapting the length of the flexible part to the shape of the mirror and the tensioning of the hook-shaped members, the present invention proposes attaching tension means to one and preferably each of the hook-shaped members. According to a particular embodiment, the tension means consist of a tension roller or drum with which a flexible part extending between the hook-shaped members can be rolled up and locked.

## Description

The present invention relates to a mirror assembly comprising a mirror support with a mirror mounted thereon and mounting means for attachment to an additional mirror extending therefrom, said mounting means comprising two spaced hook-shaped members connected via a flexible part, as well as tension means for said flexible part.

A mirror assembly of this type is generally known in the art, and is used in applications when a mirror or several mirrors positioned at a greater distance from the vehicle are required on a temporary basis. This is the case, for example, if a vehicle needs to tow a trailer, such as a caravan. The width of such trailers is often greater than that of the towing vehicle, and in such instances there is a requirement that the mirror be placed further outward in order to be able to see along the towed vehicle.

Several structures are known for the mounting of such a mirror assembly, which is also known by the expression "extension mirror" or "caravan mirror". A simple embodiment is one comprised of a mirror mounted to one already present on the vehicle. For this purpose, hook-shaped members are provided which grip the rim between the mirror housing and the actual mirror surface. A flexible band, wire or something similar extends therebetween.

In general, two types of adjustments are available. A first, rough adjustment is available which functions with a bracket or something similar, which is provided between the two hook-shaped members. A fine adjustment is available with which one of the hook-shaped members is moved over a very small distance with respect to the mirror, by which it is possible to apply final tension on the flexible part which extends between the hook-shaped members.

Such structures are complicated in design, and provide a particularly unattractive appearance of the structure. Moreover, during driving there are occurrences where the band element or such freely protruding from the tension means begins to flutter, which is undesirable.

The aim of the present invention is to provide a mirror assembly which has an attractive appearance and wherein it is possible, in a simple manner, to provide for the adaptation of various different shapes of existing mirrors with the placement of means of attachment.

This aim is realised with the mirror assembly described above in that said tension means comprise winding means accommodated in a hook-shaped member for said flexible part, said winding means being provided with a lock.

According to the present invention, the flexible part is brought to the desired length no longer through displacement, but rather by a winding movement, the winding means being mounted in both hook-shaped members. With the aid of a winding movement, the presence of a freely protruding tip of the flexible part is avoided. This makes the appearance of the mounting more attractive and the fluttering described above is avoided. By winding, it is possible to provide a wide adjustment range while a considerable force can also be applied, thus allowing the mirror assembly to be clamped precisely, with the appropriate clamping force, to the already present mirror.

The winding means can be embodied in any manner conceivable in the art. According to an advantageous embodiment of the invention, said winding means comprises a winding roll for accommodating the flexible part. The winding roll is equipped with a drive receptacle or a drive protrusion, respectively, for receiving therewith a drive tool. Preferably, the drive tool is a tool that has been specially designed for this purpose. This allows the designer to precisely determine the maximum force with which the user carries out the winding operation, so that overloading as a result of drawing in the flexible part too tightly is avoided as much as possible.

According to a further advantageous embodiment of the invention, there are locking means present that function between the winding roll and the hook-shaped member. In a particularly simple embodiment these means comprise a toothing mounted at the head end of the winding roll and a corresponding toothing in the hook-shaped member, locking occurring on engagement of the toothings. According to an advantageous embodiment of the invention, this engagement of the toothings can be promoted with the aid of a spring which drives the winding roll toward the toothing on the hook-shaped member.

According to a further embodiment of the invention,this is realised in such a way that when the above-described drive tool is introduced and more particularly when a compressive force is exerted, the winding roll is moved counter to the resilient force, causing unlocking to occur and making it possible to remove the tension on the flexible part.

According to a particular embodiment of the invention, there are extensions that extend from each of the hook-shaped members, such as elongate parts, which, close to the free tips thereof, are preferably pivotly connected to each other via a connecting part. Preferably, this connecting part has been designed to telescope. Preferably, the pivot joint is a ball-and-socket joint, the ball in turn being connected to a mirror support or mirror housing. A particularly effective structure may thus be obtained using a particularly small number of components.

According to a further advantageous embodiment, there exists a considerable space between the inward (vehicle-side) border of the mirror support or mirror supports and the mirror originally installed on the vehicle. As a result, an optimal rear view can be obtained on the one hand, and on the other hand the aerodynamic properties of the towing vehicle are effected as little as possible by the mirror assembly according to the invention.

The invention will be described in more detail below with reference to an illustrative embodiment shown in the drawings, in which:
Fig. 1 shows the principle of mounting the mirror assembly according to the invention on an existing mirror of a vehicle;
Fig. 2 is a schematic illustration of the mirror assembly according to the present invention in a non-mounted state;
Fig. 3 is a schematic illustration of the mounting of the mirror assembly according to the present invention on a vehicle;
Fig. 4 is a detailed view of the locking mechanism of the mirror assembly according to the present invention; and
Fig. 5 shows a variation of the mirror assembly according to the present invention.

In the figures, the mirror assembly according to the invention is denoted in its entirety by reference numeral 1. The assembly comprises in the present case of two mirrors 7, preferably with different optical properties, accommodated in a mirror housing 5 and a mirror housing 6. Each mirror housing 5, 6 is connected via a ball pivot 8 to an extension rod 9 or 10 respectively, on the one hand, and to a telescoping connecting piece 23, on the other hand.

Each of the extension rods 9, 10 is attached in a hook 11 or 12 respectively. Hook 11, 12 is constructed to be placed behind the rim 24 of the housing of a mirror 25 already mounted on a vehicle 21. In this case, wires 2, 3 extend between the hooks 11, 12. Instead of wires, narrow bands or such can also be utilised. To avoid contact between the wires 2, 3 and the original mirror 25, there may be provided a protection 22.

Wire 2 is secured to hook 12, while wire 3 is secured to hook 11. Wire 2 is displaceable with respect to hook 11, while wire 3 is displaceable with respect to hook 12.

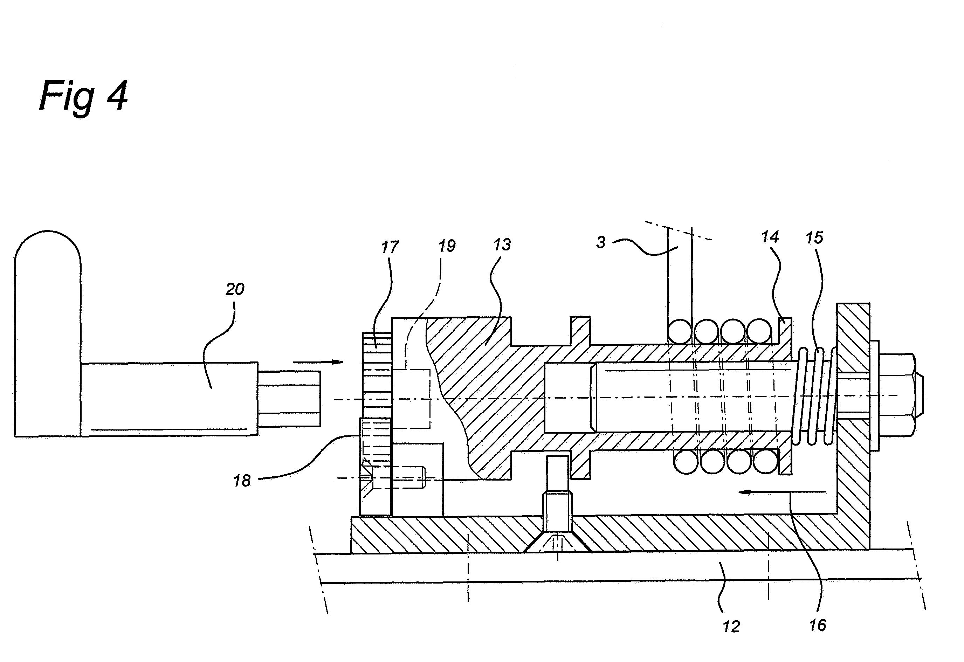

The displacement mechanism is illustrated in detail in Fig. 4 and comprises a winding drum 13, on which in this case wire 3 can be wound. Winding roll 13 is operated using a specially designed tool 20 to be introduced temporarily into receptacle 19 in the roll. A rotating movement can thus be applied for the winding or unwinding, respectively, of wire 3.

A spring 15 is present, which functions between hook 12 and a flange 14 attached to the winding drum 13 and seeks to drive winding drum 13 to the left, as illustrated in Fig. 4, in the direction of arrow 16.

The left-most head end of winding drum 13 is provided with a toothing 17. Hook 12 is provided in the same location with a toothing 18. When spring 15 presses toothings 17 and 18 together, complete blocking occurs. This blocking can be cancelled by pressing the winding drum 13 to the right, counter to the direction of arrow 16, with tool 20, thus facilitating winding or unwinding respectively. In fact, the structure can be embodied in such a way that winding without pressing is possible, wherein the toothing 17 moves along toothing 18. In this manner, a type of ratchet effect can be obtained.

The mirror described above is mounted as follows on the mirror 25 of the towing vehicle 21: with the tool 20, wires 2 and 3 are brought outward as far as possible, i.e. such that said wires have as great a length as possible. Subsequently, the hooks 11 and 12 are attached in the correct position with the remaining part of the mirror assembly. For the hooks 11 and 12, this means that they grip behind the rim 24 of the housing of the existing mirror 25 on the vehicle. Subsequently, the respective winding drums are operated one after the other, with tool 20. It is also possible to carry this out simultaneously. Tightening thus occurs from two sides. This makes it possible to tension wire 2 at a shorter length than wire 3, so allowance is made for the somewhat tapering shape of the mirror 25. As a result of the fact that apparatus 20 is no longer operated, locking is automatically provided and provision can be made for particularly robust mounting of the mirror assembly to the original mirror 25 of the vehicle.

In the present illustrative embodiment, two mirrors are illustrated, wherein one mirror can function as a blind-spot mirror. From the drawings it is clear that there is a considerable amount of free space left between the end boundary of the mirror and the original mirror. This facilitates an unimpeded passage of air, while on the other hand particularly good visibility can be obtained as a result of the fact that the two mirrors 7 are positioned relatively far outward.

Optionally, it is possible to construct the extension rods 9, 10 so as to be displaceable and clampable with respect to the hooks 11, 12, so the positioning of the mirrors 7 can be determined as a function of the conditions. The clamping of the extension rods 9, 10 at the hooks and at ball hinge 8 produces a particular stable entity, as a result of which vibrations in the mirror image are also prevented.

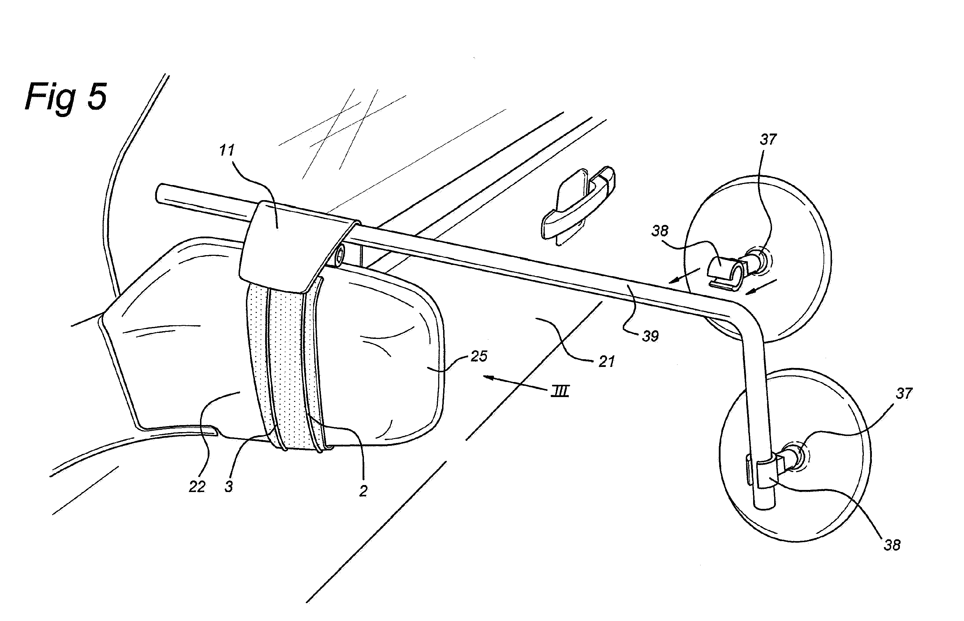

Fig. 5 shows a variation of the present invention. In this embodiment, the mirror housings with reflectors accommodated therein are denoted by reference numerals 35 and 36. In contrast to the earlier embodiments, there is just one extension rod 39 present. The extension rod is mounted to the wing mirror 25 of a vehicle with the above-described mechanism. It should be understood that the extension rod can also be mounted to the vehicle in a different manner.

The mirror housings 35 and 36 are connected via a ball joint 37 to an open clamping bracket 38. The internal dimensions of said clamping bracket are somewhat smaller than the external dimensions of the extension rod 39. The mirror housings 35 and 36 can thus be placed in any position on the extension rod 39 and are fixed in this position by the clamping effect of part 38.

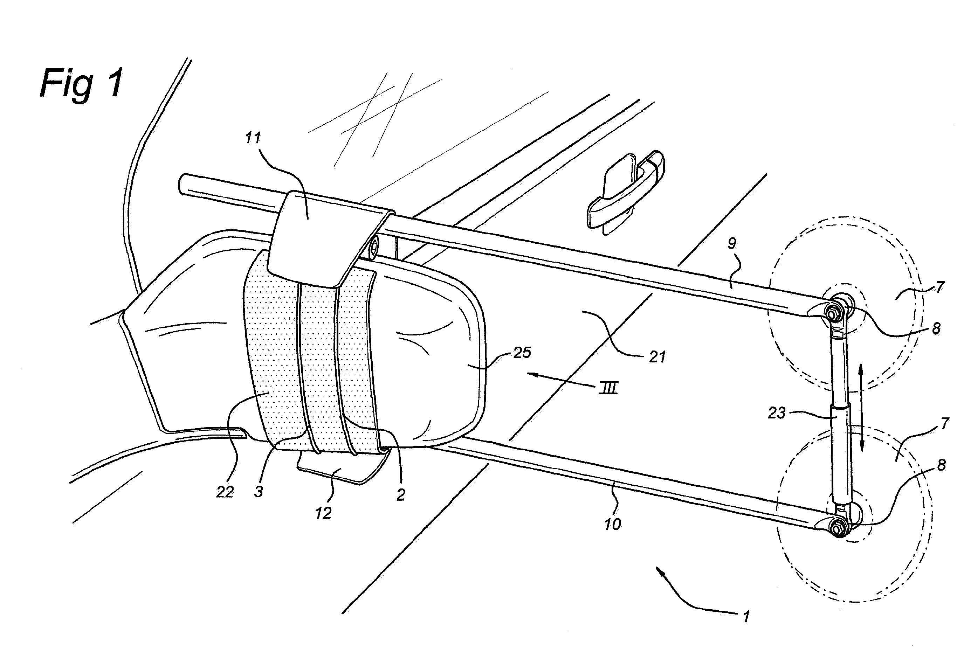

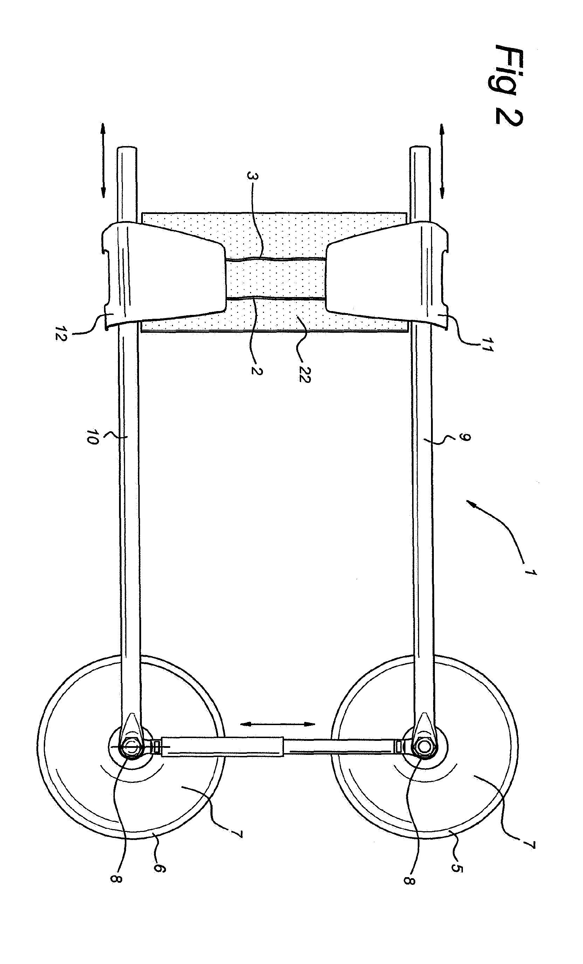

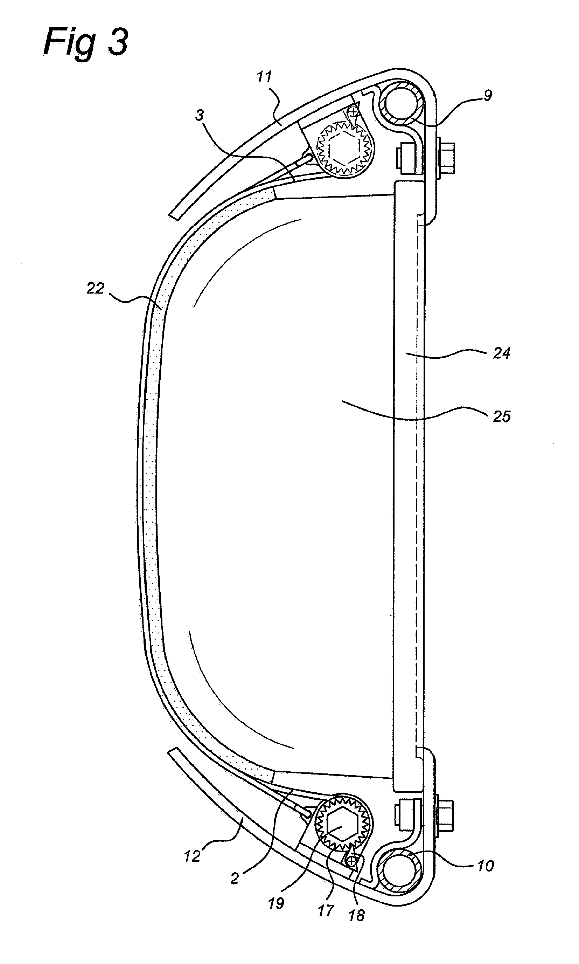

In this application, protection is explicitly sought for this variation of one or more mirror (housings) displaceable along a rod independently of the mounting of the rod on the mirror already present on a vehicle. This rod can be straight and have an end part turned at any angle or, as illustrated in Fig. 1-4, be constructed so as to extend over 180°.

Although the invention outlined above is described on the basis of an advantageous embodiment, a person skilled in the art will immediately think of variations which are within the scope of the appended claims. It is emphasized that the subject-matter of the claims is not limited to a combination of Claim 1 and the subsequent claims, but that the subsequent claims should also be taken into consideration independently of the main claim.

## Claims

1. Mirror assembly (1) comprising a mirror support (5, 6) with a mirror (7) mounted thereon and mounting means (2, 3, 11, 12) for attachment to an additional mirror (4) extending therefrom, said mounting means comprising two spaced hook-shaped members (11, 12) connected via a flexible part (2, 3), as well as tension means for said flexible part, **characterised in that** said tension means comprise winding means (13) accommodated in a hook-shaped member (11, 12) for said flexible part, said winding means being provided with a lock (17, 18).

2. Mirror assembly according to Claim 1, comprising a winding roll (13) for accommodating said flexible part provided with a drive receptacle/protrusion (19) for receiving a drive tool (20).

3. Mirror assembly according to Claim 2, wherein said lock comprises cooperating locking means (17, 18) attached to the hook-shaped member and said winding roll.

4. Mirror assembly according to Claim 3, wherein said locking means comprise a toothing (17, 18).

5. Mirror assembly according to Claim 3 or 4, comprising a spring (15) for the application of spring loading locking said locking means (17, 18).

6. Mirror assembly according to Claim 5, wherein said spring is attached in such a way that use of the drive apparatus unlocks the locking means.

7. Mirror assembly according to one of the preceding claims, wherein each of said hook-shaped members is provided with tension means.

8. Mirror assembly according to one of the preceding claims, wherein said extension includes an elongate part (9, 10) that extends from a hook-shaped member.

9. Mirror assembly according to Claim 8, wherein said elongate parts are connected to one another via a connecting piece (23) at the end remote from said hook-shaped members (11, 12).

10. Mirror assembly according to Claim 9, wherein said connection (8) is hinged.

11. Mirror assembly according to Claim 10, wherein said connection includes a support member (5, 6).

12. Mirror assembly comprising a mirror support with a mirror mounted thereon and mounting means for attachment to an additional mirror extending therefrom, wherein said mounting means comprise an elongate support, such as a rod, **characterised in that** said mirror support is provided with means for fixing the mirror in various positions on said rod.

13. Mirror assembly according to Claim 12, wherein said mirror can be placed and fixed in any position on said rod in a continuously variable manner.

14. Mirror assembly according to Claims 12 or 13, wherein said mounting means comprise clamping means.
